# EUROPÄISCHE PATENTANMELDUNG

(11) **EP 1 067 711 A2**
(43) Veröffentlichungstag der Anmeldung: **10.01.2001**
(21) Anmeldenummer: 00112548.3
(22) Anmeldetag: 14.06.2000
(51) Int. Cl.: H04B 7/08

(54) **Antennendiversitysystem, inbesondere für den mobilen Fernsehempfang**

(30) Priorität: 25.06.1999 DE 19929071
(71) Anmelder: FUBA Automotive GmbH & Co. KG, 31162 Bad Salzdetfurth (DE)
(72) Erfinder: Bösche, Ralf, 31162 Bad Salzdetfurth (DE); Tönnies, Christian, 31162 Bad Salzdetfurth (DE)
(74) Vertreter: Sobisch, Peter, Dipl.-Ing.

(57) **Zusammenfassung**

Eine Antennendiversitysystem besteht aus einer Diversityschaltung (1), die eingangsseitig mit n Empfangsantennen (2) und ausgangsseitig mit m Empfangszweigen (3) in Verbindung steht, wobei n ≥ m mit m ≥ 2 gilt, wobei am Ausgang der Empfangszweige (3) jeweils antennenspezifische Videosignale generiert werden, die in einer Diversityauswertung (6) antennenspezifisch nach Maßgabe definierter Parameter wie z.B. einer Frequenzanalyse, eines Gleichspannungsanteils usw. verglichen und bewertet werden, wobei in einer Ausgangsleitung (7) der Diversityauswertung (6) das im Sinne der Bewertung optimale Videosignal zwecks weiterer Umsetzung zur Verfügung steht und wobei über eine Steuerleitung (8) die Diversityschaltung (1) mit der Maßgabe gesteuert wird, daß nach einem vorgegebenen Zyklus weitere Empfangsantennen (2) auf die verbliebenen Empfangszweige (3) durchgeschaltet werden. Wesentlich ist eine zeitgielche Messung und Auswertung von m Videosignalen, wobei eine Umschaltung auf eine andere Antenne im Falte einer minderen Empfangsqualität zeilenweise vorgenommen wird, und zwar während der horizontalen Austastlücke. Erzielt wird ein durch eine hohe Schaltgeschwindigkeit gekennzeichneter, von Bildstörungen freier Empfang, sowohl bei stationärem als auch bei mobilem Empfang in Fahrzeugen.

## Beschreibung

Die Erfindung bezieht sich auf ein Antennendiversitysystem entsprechend dem Oberbegriff des Anspruch 1.

Diversityempfang wird bekanntlich zur Verringerung von Schwunderscheinungen benutzt und ist in unterschiedlichen Formen bekannt. Im Falle von Raumdiversity werden zwei um einige Wellenlängen versetzte Antennenanordnungen benutzt, wohingegen bei Frequenzdiversity die Nachricht auf unterschiedlichen Betriebsfrequenzen übertragen wird. Im Falle des Antennendiversities wird für den aktuellen Empfangskanal die beste Antenne aus einer Mehrfachantennenanordnung ausgewählt. Zur Auswahl der besten Antenne können die unterschiedlichsten Bewertungskriterien herangezogen werden.

Ein Diversityempfang gehört beim mobilen Radioempfang schon seit vielen Jahren zum Stand der Technik. Für den mobilen Fernsehempfang verbessert ein Antennen-Diversity ebenfalls den Signalempfang. Insbesondere für den mobilen Fernsehempfang haben sich zwei Antennendiversitysysteme urchgesetzt, die sich in den Zeitpunkten unterscheiden, zu denen eine Antennenbewertung und gegebenenfalls eine Antennenumschaltung vorgenommen wird.

So ist es beispielsweise bekannt, die Bewertung und Umschaltung während der horizontalen Austastlücke vorzunehmen. Zur Bewertung werden hierbei die Empfangsfeldstärke, der gleichgerichtete Spannungsanteil einer empfangenen Rauschspannung oder Kombinationen dieser Parameter verwendet, wobei sich infolge der Anbindung an die vertikale Austastlücke jedoch der Nachteil eines verhältnismäßig langsam arbeitenden Diversitysystems ergibt. Geht man beispielsweise von einer Empfangsfrequenz von 800 MHz aus, wird bereits bei einer Fahrzeuggeschwindigkeit von 10 km/h während einer Viertelperiode von 20 ms eine Wegstrecke zurückgelegt, die etwa dem 1,5fachen der Empfangswellenlänge entspricht. Reproduzierbare Messungen für alle Empfangsantennen einer Mehrantennenanordnung sind auf dieser Grundlage nicht möglich. Auch ist die Tauglichkeit dieses, auch Frame-Diversity genannten Systems für den mobilen Fernsehempfang in Fahrzeugen nur bedingt gegeben.

Aus der DE 196 36 125 A1 ist ein Diversitysystem für den mobilen Fernsehempfang in Fahrzeugen bekannt, bei welchem eine zeilenweise Prüfung und Umschaltung nach Maßgabe der festgestellten Empfangsbedingungen stattfindet, wobei die Bewertung und Umschaltung während der horizontalen Austastlücke, somit außerhalb des sichtbaren Bildbereichs stattfindet. Bei diesem, Line-Diversity genannten System ist eine Steigerung der Schaltgeschwindigkeit im Verhältnis zu einem Frame-Diversity-System nach Maßgabe des Verhältnisses von Vertikal- und Horizontalfrequenz der jeweiligen Ablenkströme möglich. Diese Technik ermöglicht somit reproduzierbare Meßergebnisse auch bei schneller Fahrt, wobei zur Bewertung der Signalqualität die vordere und hintere Schwarzschulter und/oder das Farbsynchronsignal herangezogen werden können.

Bekanntlich setzt sich das Basisband des Fernsehsignals aus Synchron-Austast-, Luminanz- und Chrominanzanteilen zusammen, wobei Austast-, Synchron- und Luminanzanteile durch Amplitudenmodulation übertragen werden und nur während der horizontalen Austastzeit ein definierter Spannungswert zur Verfügung steht, dessen Güte ausgewertet werden kann. Dieser Spannungswert, auch Schwarzpegel genannt, wird während jeder Zeile auf der vorderen und hinteren Schwarzschulter des Synchronimpulses mit übertragen und bildet einen Bezugswert, zu dem die entsprechenden Spannungswerte für den Synchronimpuls als höchstem Wert einerseits und dem Weißwert als niedrigstem Wert andererseits in einem festen definierten Verhältnis stehen. Schwankt somit der Pegel des Synchronimpulses, schwanken Schwarzwert und Weißwert nach Maßgabe dieses festen Verhältnisses gleichermaßen.

Diese Rahmenbedingungen gelten gleichermaßen für die horizontalen und für die vertikalen Synchronimpulse, und es wird aus diesem Grunde sowohl bei Frame-Diversity-Systemen als auch bei Line-Diversity-Systemen eine Messung der Antennensignale nur während der vertikalen bzw. horizontalen Austastzeit vorgenommen. Dies hat jedoch zur Folge, daß bei unterschiedlichen Empfangspegeln der Synchronimpulse an den Antennen sich Spannungssprünge im demodulierten Signal während der Meßzeiten ergeben. Diese Spannungssprünge im Basisband sind unvermeidlich, da infolge einer Messung des n-ten Synchronimpulses, die zur Umschaltung auf eine andere Antenne führen soll, die diesbezügliche Regelung erst zum (n + 1)-ten Impuls wirksam werden kann. Eine weitere Folge hiervon ist, daß, nachdem mit dem Umschalten der Antennen während der Austastzeiten das ankommende amplitudenmodulierte Signal durch die unterschiedlichen Synchronimpulspegel der Antennen eines Mehrantennensystems ebenfalls amplitudenmoduliert ist, sich die Spannungsverhältnisse der empfangenen Signale bezüglich der Schwarz- und Weißwerte ebenfalls ändern, welches zu wahrnehmbaren Helligkeitsschwankungen des empfangenen Bildes führt.

Die Bewertungskriterien für das empfangene Signal sind demzufolge auf Kriterien beschränkt, die die Austastlücke betreffen, z.B. Messungen des Rauschabstands, des Pegels dieser Impulse, der Verzerrungsamplituden zur Erkennung von Geisterbildern sowie des Farbsynchronimpulses.

Sowohl bei Frame- als auch bei Line-Diversity-Systemen werden die einzelnen Antennen einer Mehrantennenanordnung nacheinander vermessen, so daß die Bewertungskriterien , auf denen die Entscheidung für eine eventuelle Umschaltung auf eine andere Antenne beruht, nur nacheinander zur Verfügung stehen. Dies hat zur Folge, daß insbesondere bei mobilem Fernsehempfang für die Messungen keine vergleichbaren Empfangsbedingungen vorliegen, so daß die Meßergebnisse durch Zufallsereignisse beeinflußt werden. Insbesondere bei Empfangsbedingungen, die durch eine geringe Feldstärke und ein dementsprechend schlechtes Signal/Rausch-Verhältnis gekennzeichnet sind, können fehlerhafte Umschaltungen entstehen.

Diese Nachteile betreffen alle Veröffentlichungen wie DE 196 36 125 A1 oder DE 42 28 840 C1, die die Antennenqualität sequentiell betrachten und nicht wie hier beschrieben, eine parallele Auswertung von mindestens zwei Antennen vornehmen.

Um ein möglichst gutes Signal zu erhalten, d.h. einen möglichst großen Signal/Rausch-Abstand, werden vom Sender aus die Synchronsignale mit maximaler Amplitude gesendet. Ausgehend von dieser Maximalamplitude findet zur Darstellung des sichtbaren Bildes eine negative Amplitudenmodulation statt, so daß im Rahmen des Videosignals diese Maximalamplitude mit dem Faktor (- 1) multipliziert wird, welches darin zum Ausdruck kommt, daß die Schwarz- und Weißwerte einen geringeren Pegel aufweisen als die Werte der Synchronimpulse. Diese negative Amplitudenmodulation ist eine wichtige Voraussetzung für die beschriebenen Antennen-Diversity-Steuerungen, deren Messungen während der Synchronimpulszeiten durchgeführt werden, während denen ein gutes Signal Rausch-Verhältnis gegeben ist. Diese Voraussetzungen gelten für das PAL- und das NTSC-Verfahren, nicht jedoch beispielsweise für das SECAM L,L'-Verfahren, bei welchem eine positive Amplitudenmodulation benutzt wird.

Es ist die Aufgabe der vorliegenden Erfindung, ein Antennendiversitysystem zu konzipieren, bei dem eine Auswahl der optimalen Antenne insbesondere unter der Bedingung eines mobilen Empfangs möglich ist, bei dem ferner Einschwingvorgänge, bedingt durch unterschiedliche Signalpegel im Falle des Umschaltens auf eine andere Antenne keine Bildstörungen auslösen, und zwar unabhängig davon, ob ein Empfang nach Maßgabe einer positiven oder negativen Amplitudenmodulation gegeben ist. Gelöst ist diese Aufgabe bei einem solchen System durch die Merkmale des Kennzeichnungsteils des Anspruchs 1.

Erfindungswesentlich ist, daß im Rahmen dieses Diversity-Systems mehrere demodulierte Antennensignale zeitkontinuierlich und zeitgleich nach bestimmten Bewertungskriterien ausgewertet werden, so daß ein Einfluß zufälliger Feldänderungen zwischen dem Zeitpunkt einer Messung und dem Zeitpunkt einer Umschaltung weitgehend eliminiert wird, da sämtliche Empfangszweige gleichermaßen von zufälligen Feldveränderungen betroffen sind. Darüber hinaus sind Messungen und Bewertungen über die reinen Synchronzeiten bzw. Austastlücken hinaus möglich, wodurch Zufallsereignisse durch Mittelung vermieden werden können. Bildstörungen beim stationären wie auch beim mobilen Empfang, die beispielsweise durch Pegeleinbrüche infolge Unrundheit von Antennenrichtcharakteristika, Amplitudenfading usw. ausgelöst werden, können bei der erfindungsgemäßen Diversityvorrichtung vermieden werden. Da die Messungen nicht auf die Synchronzeiten beschränkt sind und eine Signalbewertung auch außerhalb dieser Zeiten möglich ist, ist eine Anwendbarkeit der Erfindung bei positiver und negativer Amplitudenmodulation, somit bei den Fernsehnormen PAL, NTSC und SECAM möglich.

Entsprechend den Merkmalen des Anspruchs 2 ist das System dahingehend eingerichtet, daß eine Umschaltung auf einen anderen Empfangszweig im Falle einer Verschlechterung der Empfangsqualität auf dem einen Empfangszweig zu Zeitpunkten außerhalb des sichtbaren Bildes, somit während einer Austastlücke durchgeführt wird. Auch auf diesem Wege wird zur Verbesserung der Bildqualität beigetragen, da der Umschaltvorgang als solcher nicht bzw. kaum wahrnehmbar ist. Dies ist insbesondere dann der Fall, wenn die Zeitspanne für die Ermittlung der Bewertungskriterien und das Umschalten innerhalb des Rahmens einer solchen Zeitspanne liegt, innerhalb derer ein Einschwingvorgang der Empfangszweige im Falle einer Änderung der Empfangsbedingungen abgeschlossen ist. Dies ist in jedem Fall innerhalb einer solchen Zeitspanne möglich, die für den mobilen Fernsehempfang in einem Fahrzeug zulässig ist.

Entsprechend den Merkmalen des Anspruchs 3 sind unterschiedliche Bewertungskriterien vorgesehen, um die Empfangsqualität eines jeweils antennenspezifischen Videosignals zu beschreiben. So eröffnet eine zeitgleiche Frequenzanalyse zweier amplitudenmodulierter Signale den Vorteil, eine Signalbewertung unabhängig von positiver oder negativer Amplitudenmodulation und außerhalb der Austastlücken durchzuführen. Sämtliche der aufgelisteten Bewertungskriterien sind zeitkontinuierlich und insbesondere zusätzlich zu den eingangs genannten Bewertungskriterien des Line-Diversity-Systems innerhalb der für den mobilen Fernsehempfang zulässigen Zeitspanne möglich, ohne daß die Grundlage für reproduzierbare Messungen an den Empfangssignalen gestört wird.

Die Erfindung wird im folgenden unter Bezugnahme auf die in den Zeichnungen wiedergegebenen Ausführungsbeispiele näher erläutert werden. Es zeigen:
Fig. 1 ein erstes Ausführungsbeispiel eines Schaltschemas eines erfindungsgemäßen Antennendiversitysystems;
Fig. 2 ein weiteres Ausführungsbeispiel eines Schaltschemas eines erfindungsgemäßen Antennendiversitysystems.

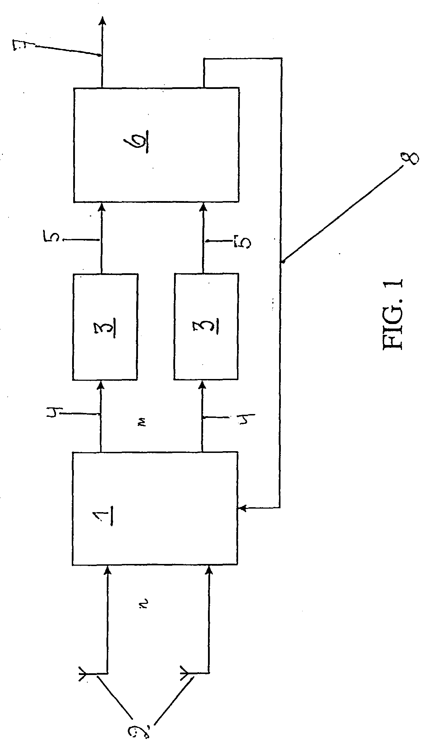

Mit 1 ist in Fig. 1 eine Diversity-Schaltung bezeichnet, welche eingangsseitig mit n Empfangsantennen 2 und ausgangsseitig mit m (m ≥ 2) Empfangszweigen 3 in Verbindung steht. Es handelt sich bei den n Antennen 2 um die einzelnen Antennen eines Mehrantennensystems und es beinhaltet die Schaltung 1 unter anderem einen Umschalter, der dahingehend eingerichtet ist, daß jeder der m Empfangszweige 3 mit jeder der n Antennen 2 verbunden werden kann, wobei n ≥ m gilt.

Jeder der Empfangszweige 3 ist dahingehend eingerichtet, daß aus den, über die m HF Eingangsleitungen 4 übertragenen HF-Signale ausgangsseitig ein vollständiges Videosignal (FBAS) erzeugt wird.

Auf den Ausgangsleitungen 5 der Empfangszweige 3 stehen somit Videosignale an, deren Qualität entsprechend den Empfangsbedingungen der einzelnen Antennen 2, jedoch auch der elektrischen Verbindungswege unterschiedlich sein kann. Diese m Videosignale werden in einer Diversityauswertung 6 nach einer Reihe von Kriterien bewertet, welche darauf abzielen, das qualitativ beste dieser m Signale festzustellen, welches dann über die Ausgangsleitung 7 der Diversityauswertung 6 für die weitere Verwendung im Rahmen des Fernsehempfangs zur Verfügung steht.

Die Diversityauswertung 6 steht über eine Steuerleitung 8 mit der Diversityschaltung 1 in Verbindung, über welche nach Ermittlung des bestmöglichen Videosignales diese Diversityschaltung 1 veranlaßt wird, nach einem definierten Zyklus weitere der n Antennen 2 auf die übrigen Empfangszweige 3 durchzuschalten, so daß im Rahmen der Diversityauswertung 6 ein zeitkontinuierlicher und zeitgleicher Vergleich der Empfangsbedingungen der n Antennen stattfindet.

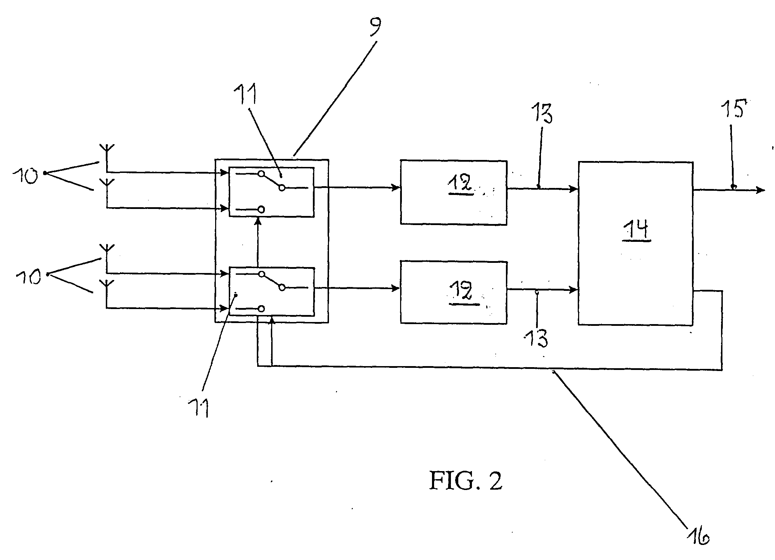

Bei dem in Fig. 2 dargestellten Ausführungsbeispiel steht eine Diversityschaltung 9 eingangsseitig mit vier Antennen 10 in Verbindung, die jeweils zu zwei Gruppen, jede bestehend aus zwei Antennen 10, zusammengefaßt sind und über einen Umschalter 11 der Diversityschaltung 9 somit paarweise jeweils einem Empfangszweig 12 zugeordnet sind. Die Empfangszweige 12 entsprechen von ihrem Aufbau und ihrer Funktion her den Empfangszweigen 3 und sind dazu bestimmt, auf ihren jeweiligen Ausgangsleitungen 13 ein vollständiges Videosignal bereitzustellen, wobei diese beiden Videosignale in einer Diversityauswertung 14 miteinander verglichen werden, und zwar mit dem Ziel, auf der Ausgangsleitung 15 das qualitativ beste Videosignal für den Fernsehempfang zur Verfügung zu stellen. Die Diversityauswertung 14 steht wiederum über eine Steuerleitung 16 mit der Diversityschaltung 9, insbesondere den dortigen Umschaltern 11 in Verbindung.

In ähnlicher Weise wie bei dem Ausführungsbeispiel gemäß Fig. 1 findet auch hier ein zeitgleiches Generieren von zwei Videosignalen statt, die über die Ausgangsleitungen 13 in die Diversityauswertung 14 gelangen, wobei in Verbindung mit den Umschaltern 11 die Empfangsqualität sämtlicher Antennen 10 der Mehrantennenanordnung vermessen werden kann. Die Feststellung, daß das Videosignal des einen Empfangszweiges 12 das relativ bessere der beiden Empfangssignale ist, führt dazu, daß dieser Empfangszweig 12 in der Folge als Referenzzweig dient, dessen Videosignal über die Ausgangsleitung 15 der Diversityauswertung 14 weitergeleitet wird, wohingegen der jeweils andere Empfangszweig als Suchzweig fungiert, und zwar mit der Folge, daß über die Steuerleitung 16 so lange zwischen den beiden dortigen Antennen 10 des Antennenpaares Umschaltungen stattfinden, bis in Verbindung mit der Diversityauswertung 14 die Feststellung getroffen werden kann, daß das über diesen Empfangszweig eingehende Videosignal im Vergleich zu demjenigen des Referenzzweiges das bessere ist. Diese Feststellung führt in der Folge dazu, daß die Funktionen von Referenz- und Suchzweig miteinander vertauscht werden.

Das zeitgleiche Messen in Kombination mit einer zeitkontinuierlichen Auswertung der Empfangsqualitäten der einzelnen Empfangszweige hat zum Vorteil, daß zufällige Feldveränderungen sämtliche Empfangszweige gleichermaßen betreffen und Messungen sowie Bewertungen über die reinen Austastzeiten hinaus möglich sind, wodurch Zufallsereignisse durch Mittelung vermieden werden können. Nachdem zeitkontinuierliche Messungen auch außerhalb der Austastzeiten möglich sind, kann ferner eine Signalbewertung unabhängig von positiver oder negativer Amplitudenmodulation stattfinden, so daß dieses System gleichermaßen für die Fernsehstandards PAL, NTSC und SECAM einsetzbar ist.

Die Vorgänge der Analyse der Bewertungskriterien der Empfangsqualitäten der einzelnen Empfangszweige einschließlich eines eventuellen Umschaltens auf eine andere Antenne sind im Rahmen einer solchen Zeitspanne möglich, die kleiner als die Einschwingzeiten der Empfangszweige ausfällt, so daß beim Umschalten auf einen besseren Empfangszweig ein einwandfreier Betrieb nachfolgender Signalstufen mit ihren Klemmschaltungen möglich ist. Die Umschaltzeitpunkte auf den besseren Empfangszweig sollten vorzugsweise außerhalb der sichtbaren Bildbereiche liegen, um wahrnehmbare Unregelmäßigkeiten der Bildqualität zu vermeiden.

## Patentansprüche

1. Antennendiversitysystem für den mobilen Empfang von HF-Signalen im Meter- und Dezimeterwellenbereich, insbesondere für den mobilen Fernsehempfang, die zum Prüfen der von den einzelnen Antennen einer Mehrantennenanordnung empfangenen Signale und zum Durchschalten einer Antenne mit der jeweils besten Signalqualität bestimmt ist, bestehend aus zumindest einer Diversityschaltung (1), die eingangsseitig an die Mehrantennenanordnung angebunden ist, wobei die Diversityschaltung zur zeilenweisen Prüfung der Empfangsverhältnisse und dementsprechenden Umschaltung auf eine andere Antenne der Mehrantennenanordnung eingerichtet ist,
dadurch gekennzeichnet,
- daß den n Eingängen der Diversityschaltung (1) m (m ≥ 2), (m ≤ n) Ausgänge zugeordnet sind,
- daß den m Ausgängen jeweils Empfangszweige (3,12) zugeordnet sind, die ihrerseits zur ausgangsseitigen Generierung eines vollständigen, jeweils antennenspezifischen Videosignals eingerichtet sind und
- daß eine Diversity-Auswertung (6,14) zur zeitgleichen und kontinuierlichen Auswertung der Empfangsqualitäten der m Videosignale, zur Weiterleitung des qualitativ jeweils besten Videosignals der m Signale und zur Steuerung der Diversityschaltung (1) vorgesehen ist.

2. Diversitysystem nach Anspruch 1,
dadurch gekennzeichnet,
- daß die Diversityauswertung (6,14) zur Umschaltung auf einen anderen Empfangszweig (3,12) außerhalb des sichtbaren Bildes, somit in einer Austastlücke, bestimmt und eingerichtet ist.

3. Diversitysystem nach Anspruch 1 oder 2,
dadurch gekennzeichnet,
- daß die Diversityauswertung (6,14) zum Zweck der Bildung eines Bewertungskriteriums für die Empfangsqualität antennenspezifischer Videosignale zur Ermittlung einer Spektralanalyse dieser Signale, des Gleichspannungsanteils einer Rauschspannung dieser Signale, des Gleichspannungsanteils und/oder Kombinationen dieser Parameter eingerichtet ist.
